**Europäisches Patentamt**

**European Patent Office**

**Office européen des brevets**

(19)

(11) **EP 1 207 463 A2**

(12) **EUROPEAN PATENT APPLICATION**

(43) Date of publication:
**22.05.2002 Bulletin 2002/21**

(51) Int Cl.⁷: **G06F 17/30**

(21) Application number: **01127556.7**

(22) Date of filing: **19.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Ikeda, Jun**<br>**1006, Oaza Kadoma, Kadoma-shi, Osaka-fu (JP)**<br>• **Ojima, Shui**<br>**1006, Oaza Kadoma, Kadoma-shi, Osaka-fu (JP)**<br>• **Hata, Ryota**<br>**1006, Oaza Kadoma, Kadoma-shi, Osaka-fu (JP)** |
| (30) Priority: **17.11.2000 JP 2000350783** | |
| (71) Applicant: **MATSUSHITA ELECTRIC INDUSTRIAL CO., LTD.**<br>**Kadoma-shi, Osaka 571-8501 (JP)** | (74) Representative:<br>**Leson, Thomas Johannes Alois, Dipl.-Ing.**<br>**Tiedtke-Bühling-Kinne & Partner GbR,**<br>**TBK-Patent,**<br>**Bavariaring 4**<br>**80336 München (DE)** |
| (72) Inventors:<br>• **Hirashima, Tsuyoshi**<br>**1006, Oaza Kadoma, Kadoma-shi, Osaka-fu (JP)** | |

(54) **Method, recording medium and device for delivering stored images**

(57)    A stored image is delivered via a network in response to requests from receiving terminals. Information concerning the color properties of the receiving terminals is acquired, and, based on the acquired information, the stored image is color-converted into images in accordance with the color properties of each receiving terminal. The color-converted stored images are the delivered. An output profile for each receiving terminal is used to improve color reproductivity.

Fig. 1

**Description**

**BACKGROUND OF THE INVENTION**

1. Field of the Invention

The present invention relates to a method, recording medium, and device for delivering stored images to general receiving terminals via a network.

2. Description of the Related Art

Recently, due to expansion of the Internet as a means for accumulating and disclosing information, the WWW (World Wide Web) system has been widely used. In the same manner as electronic mail, a user having a receiving terminal can access worldwide servers by breaking through a LAN barrier by use of this system.

The WWW system is a client/server system based on the HTTP (Hyper Text Transfer Protocol), which enables retrieval of various media information including images, sounds, and the like, as well as text information, between a client application, called a WWW browser, and a WWW server. By selecting only a point indicating a hyperlink displayed to the WWW browser with a mouse, a user can easily track information.

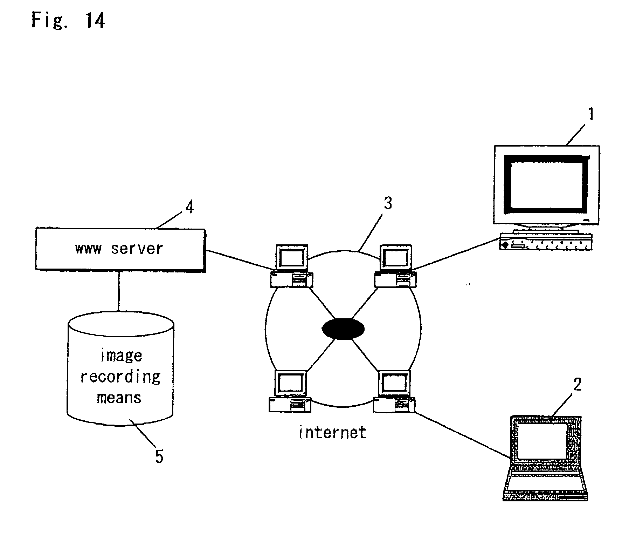

Referring to Fig. 14, a stored image transmission method using the WWW system is explained. A stored image to be disclosed and an HTML (Hyper Text Markup Language) file linked with this image are stored in image recording means 5 which WWW server 4 refers to. Receiving terminals 1 and 2 are in environments where they receive stored images via the Internet 3.

When a user specifies the address of WWW server 4, using the WWW browser of receiving terminal 1, the HTML file is downloaded from WWW server 4 and displayed to the WWW browser of receiving terminal 1.

Then, when the user selects a link to a displayed stored image, an image file is downloaded from WWW server 4 and displayed to the WWW browser of receiving terminal 1.

Also, the stored image can be displayed to receiving terminal 2 with a WWW browser by the same procedures as mentioned above. Thus, in image storing transmission using the WWW system, by accessing WWW server 4 to retrieve image information, the user can acquire and display a desired stored image.

However, identified images change in displayed colors between terminals 1 and 2 if the display color properties of receiving terminals 1 and 2 are different from each other. Also, if the color properties of an image stored in image storing means 5 change between receiving terminals 1 and 2, display colors intended by WWW server 4 cannot be reproduced.

Furthermore, preparation of servers to accommodate each terminal such as a server for receiving terminal 1 and a server for receiving terminal 2 is not realistic in terms of content creation work volume and hardware resources.

Especially recently, for example, with on-line shopping or on-line auctions, cases where articles are displayed as color images, and a user sizes up the articles based on these color images have increased. In such a case, if the image which the user observes on the receiving terminal and an article which the user actually receives are different in color from each other, this causes the user to return the article or this may cause other problems.

**OBJECTS AND SUMMARY OF THE INVENTION**

Therefore, it is an object of the present invention to provide a stored image delivering method and relevant techniques whereby the color of an image displayed by a receiving terminal is made close to the original color of the stored image at the server side.

In a method according to a first aspect of the invention, in response to a request from a receiving terminal, a stored image is delivered via a network and information regarding the color properties of the receiving terminal is acquired. Based on this acquired information, the stored image is color-converted so as to correspond to the color properties of the receiving terminal. Then, the color-converted stored image is delivered to the receiving terminal.

According to this construction, in a case where an image is displayed by receiving terminals or browsers without color management functions, even if the color properties of the receiving terminals are different from each other, the color of the image to be displayed is matched with each other as much as possible.

In a method according to a second aspect of the invention, stored image selection information and receiving terminal attribute information are received from a WWW server. By using an output profile corresponding to the attribute information of the receiving terminal, the stored image is converted into an image in accordance with the color properties of the receiving terminal. The converted image is then stored in a cache. Positional information ofthe output image stored in the cache or positional information of an HTML file linked with the output image is notified to the WWW server.

According to this construction, by cache control, the load on the color converting calculation is reduced, and the response is improved.

In a method according to a third aspect of the invention, stored image selection information and receiving terminal attribute information are received from a WWW server. By using an input profile regarding an input device which has generated the stored image and an output profile corresponding to the attribute information of the receiving terminal, the stored image is converted into an image in accordance with the color properties of the receiving terminal. The converted image is then stored in a cache. Positional information of the output image stored in the cache or positional information of an HTML file linked with the output image is notified to the WWW server.

According to this construction, by use of the input profile, images generated by a plurality of input devices whose color properties are different from each other can be stored as they are.

In a method according to a fourth aspect of the invention, a receiving terminal uses attribute information that has been stored in the receiving terminal during previous access to the WWW server.

According to this construction, by automatically acquiring information stored in the receiving terminal, only a single access from the receiving terminal makes it unnecessary to set the attribute information from the next time.

In a method according to a fifth aspect of the invention, by comparing the color reproduction range of an input device which has generated a storing image and the color reproduction range of a receiving terminal, a color converting method is switched.

According to this construction, by switching the converting method based on a comparison of the color reproduction ranges, collapse of gradation balance due to the difference in the color reproduction range is suppressed. Thus, the displayed color is made close to the original color intended by the server, even in a terminal with a narrow color reproduction range.

The above, and other objects, features and advantages of the present invention will become apparent from the following description read in conjunction with the accompanying drawings, in which like reference numerals designate the same elements.

## BRIEF DESCRIPTION OF THE DRAWINGS

Fig. 1 is a schematic block diagram of a system relating to a first embodiment of the present invention.

Fig. 2 is an operation explanatory view of the system of Fig. 1.

Fig. 3 is an illustration of an output profile table of system of Fig. 1.

Fig. 4 is an illustration of a cache table of the system of Fig. 1.

Fig. 5 is an illustration of an input form of the system of Fig. 1.

Fig. 6 is an explanatory view of color conversion of the system of Fig. 1.

Fig. 7 is a flowchart of an input and output control means of the system of Fig. 1.

Fig. 8 is a schematic block diagram of a system relating to a second embodiment of the present invention.

Fig. 9 is an illustration of a profile table of the system of Fig. 8.

Fig. 10 is a schematic block diagram of a system relating to a third embodiment of the present invention.

Fig. 11 is an x-y chromaticity diagram of the system of Fig. 10.

Fig. 12 is a flowchart of a profile comparing means of the system of Fig. 10.

Fig. 13 is an explanatory view of perceptual correction of the system of Fig. 10.

Fig. 14 is a schematic block diagram of the system relating to a conventional method.

## DETAILED DESCRIPTION OF THE PREFERRED EMBODIMENT

Next, embodiments of the invention are explained with reference to the drawings.

Embodiment 1

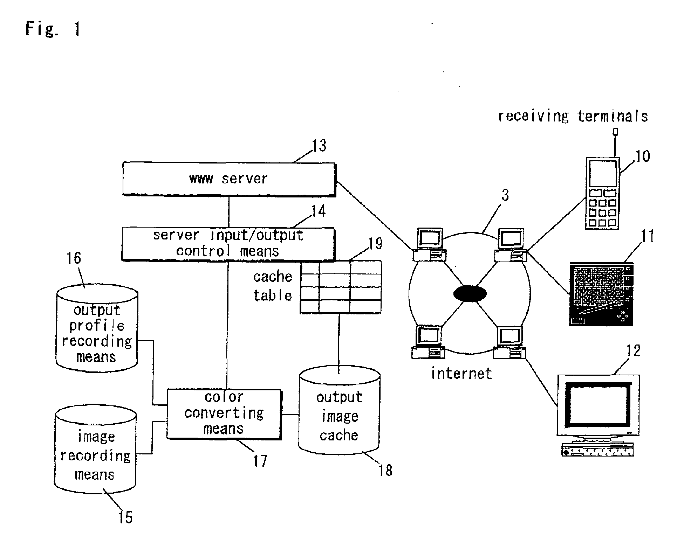

Referring to Fig. 1, receiving terminals 10, 11, and 12 are connected to WWW server 13 via Internet 3. Herein, receiving terminal 10 is a portable telephone with a small-sized color LCD, receiving terminal 11 is a mobile computer with a color LCD that is larger than that of receiving terminal 10, and receiving terminal 12 is a desktop-type computer with a CRT.

The color properties and color reproduction ranges (Gamut) of receiving terminals 10, 11, and 12 are different from each other.

WWW server 13 provides services corresponding to HTTPs. Server input/output control means 14 is connected to WWW server 13 to control inputs and outputs between elements to be described later and WWW server 13.

Image recording means 15 includes a hard disk device or the like. Public storing images are stored in image recording means 15. In this embodiment, the storing images are in a JPEG format, however, the saving format is optional.

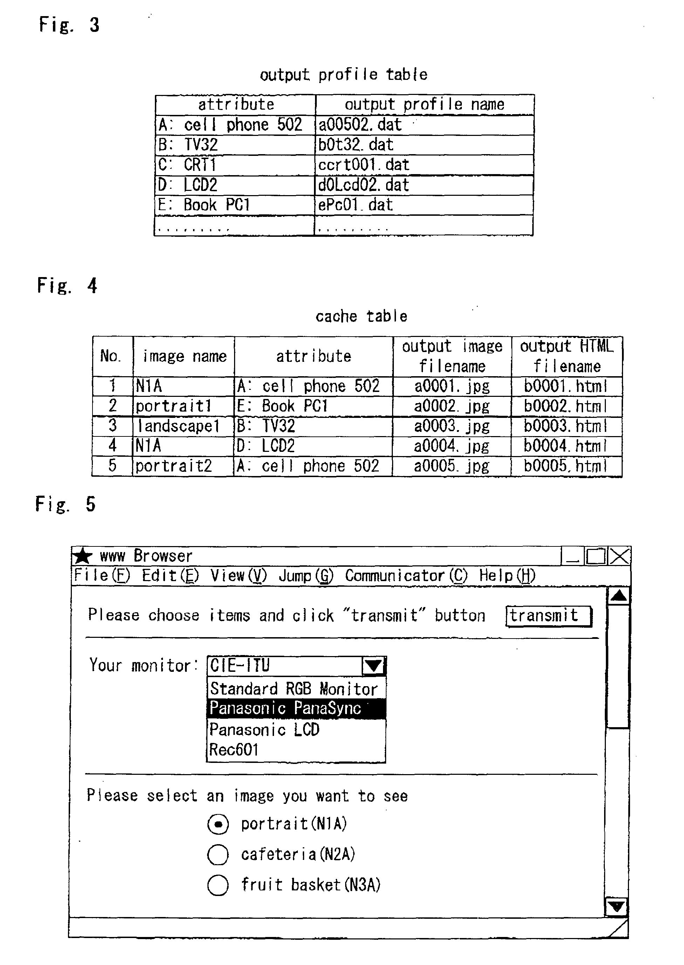

Referring to Figs. 1 and 3, an output profile table is created in an output profile recording means 16. In this table, attribute information of the receiving terminals (in this embodiment, manufacturers names and model numbers are used, however, telephone numbers of locations at which receiving terminals are installed may be also be used), and output profile names corresponding to the information are associated with each other and recorded.

Hereinafter, "output" means an output of a stored image, more specifically, means where a stored image is displayed to a display part of a receiving terminal, or a stored image is delivered via a network in order to display it.

Color converting means 17 uses an output profile corresponding to a corresponding receiving terminal in output profile recording means 16 to color-convert an image stored in image recording means 15. Output image cache 18 saves the stored image color-converted by color converting means 17.

Referring to Figs. 1 and 4, specifications of the stored image saved in the output image cache after being color-converted are recorded in Cache Table 19. In this table, cache numbers, titles of stored images, attribute information of corresponding receiving terminals, and output image file names are recorded. If a request arises wherein a stored image can be diverted as it is after being color converted, color conversion by color converting means 17 may be omitted, so that the processing burden is reduced, thus reducing the time required for color conversion and improving the response.

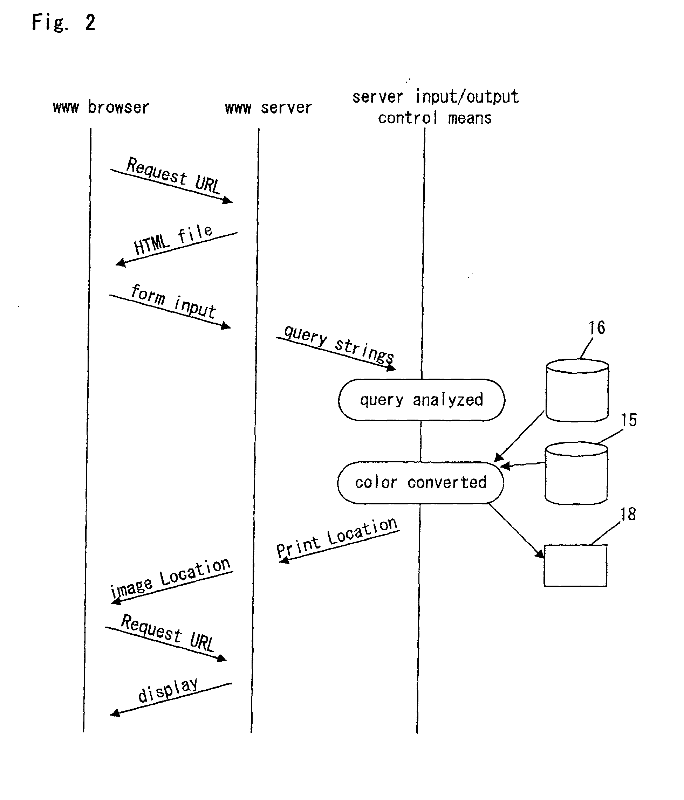

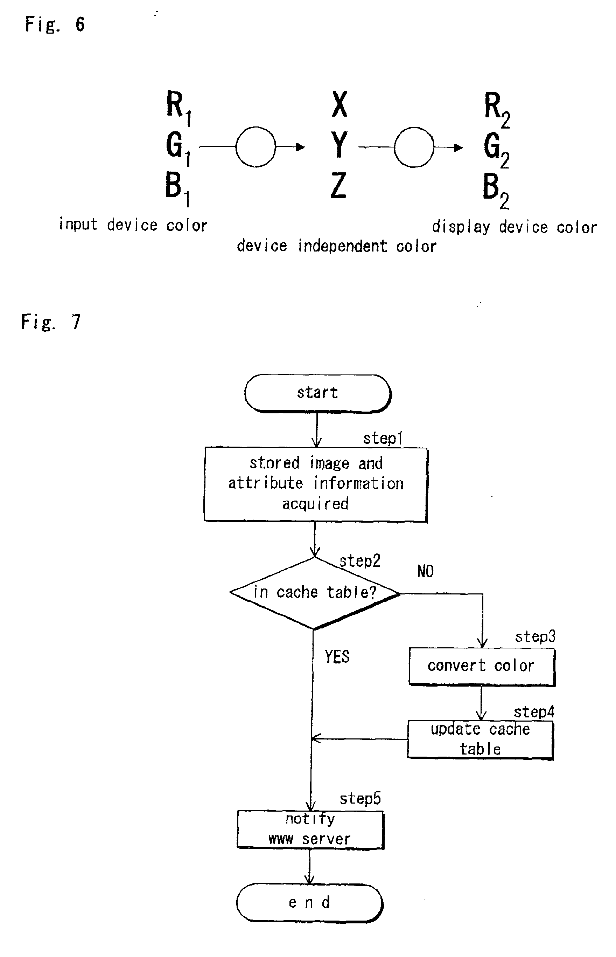

Next, referring to Figs. 1, 2 and 5, processes of the delivery method of this embodiment are explained. First, as shown in Fig. 2, when a user requests the address of WWW server 13 in a URL, the menu screen of Fig. 5 is transmitted as an HTML file. This menu image is for requesting inputs of attribute information of the user display part and a desired stored image.

Herein, when the user inputs the attribute information of his/her display part and a desired stored image on the menu of the browser, the information is transmitted to WWW server 13 as a form input.

When the form character string is transmitted to server input/output control means 14 by WWW server 13, the form character string is query-analyzed. By using the Output Profile Table of Fig. 3, an output profile corresponding to the color attribute of the receiving terminal is selected by output profile recording means 16. The selected stored image is selected from image recording means 15.

The selected stored image is converted into an image matching the color properties of the terminal by color converting means 17 by using the output profile. The color-conversion method is described in greater detail later.

The color-converted stored image is temporarily saved in output image cache 18, and the information is recorded in Cache Table 19.

Server input/output control means 14 creates an HTML file linked with the output image, and notifies WWW server 13 of its positional information as the URL. On the other hand, the WWW browser of the receiving terminal automatically accesses the transmitted URL. Then, an image matching the color properties of the receiving terminal is delivered to the receiving terminal and displayed to the display part of the receiving terminal.

Referring to Fig. 6, the operation of color converting means 17 will be explained. In this embodiment, images inputted by a specific scanner are stored in image recording means 15. Colors (R1, G1, B1) inputted by the specific scanner are referred to as input device colors.

$$R_1' = R_1^{\gamma_1}$$
$$G_1' = G_1^{\gamma_1} \qquad \text{Equation 1}$$
$$B_1' = B_1^{\gamma_1}$$

$$\begin{bmatrix} X \\ Y \\ Z \end{bmatrix} = \begin{bmatrix} & M_1 & \end{bmatrix} \begin{bmatrix} R_1' \\ G_1' \\ B_1' \end{bmatrix} \qquad \text{Equation 2}$$

The input device colors are converted into colors that do not depend on the device by Equation 1 and Equation 2. In Fig. 6, these first converted colors are referred to as device independent color. In Equation 1 and Equation 2, $\gamma 1$ and M1 are, respectively, a gamma coefficient and a color coordinate system converting matrix, which are transformation coefficients uniquely determined depending on the characteristics of the input device.

$$\begin{bmatrix} R_2^{'} \\ G_2^{'} \\ B_2^{'} \end{bmatrix} = \begin{bmatrix} & M_2^{-1} & \end{bmatrix} \begin{bmatrix} X \\ Y \\ Z \end{bmatrix} \qquad \text{Equation 3}$$

$$R_2 = R_2^{' \; 1/\gamma_2}$$
$$G_2 = G_2^{' \; 1/\gamma_2} \qquad \text{Equation 4}$$
$$B_2 = B_2^{' \; 1/\gamma_2}$$

Next, the device independent colors are converted into colors existing in the receiving terminal by Equation 3 and Equation 4. These secondly converted colors are referred to as display device colors in Fig. 6. In Equation 3 and Equation 4, $\gamma 2$ and M2 are, respectively, a gamma coefficient and a color coordinate system converting matrix, which are transformation coefficients uniquely determined from the output profile corresponding to the color attribute information of the terminal.

Referring now to Fig. 7, the control of output image cache 18 by server input/output control means 14 is explained. Server input/output control means 14 manages Cache Table 19.

First, server input/output control means 14 acquires the title of a selected stored image and attribute information of the receiving terminal in step 1.

In step 2, if an entry is made in Cache Table 19, server input/output control means 14 does not make a color converting instruction to color converting means 17, but transfers process to step 5, notifies the WWW server 13 of the position of the HTML file linked with an output image (which has already been color-converted and can be diverted), and ends the process (step 5).

On the other hand, if no entries are made in Cache Table 19 (step 2), the control means carries out color conversion (step 3), updates Cache Table 19 (step 4), and then notifies WWW server 13 of the position of the HTML file linked with the output image and ends the process (step 5).

In this embodiment, the following effects are obtained for delivery of a stored image to a plurality of terminals with WWW browsers.

(1) When the image is displayed by receiving terminals without color management functions, even if receiving terminals 10, 11, and 12 are different in color properties from each other, the color of the image to be displayed is almost matched with each other.

(2) When the image is displayed by browsers without color management functions, even if the color properties are different, the colors of the displayed images are almost matched with each other.

(3) By cache control, if an image that has already been color-converted is diverted, color conversion is omitted, the load on the color converting calculation is reduced, and time required for the color conversion is eliminated, thus improving the response.

(4) The creation of a simple menu, as shown in Fig. 5, reduces the number of color attribute information setting items for the receiving terminals, and saves the user labor.

Furthermore, while not being limited thereto, additional changes as follows are also possible embodiments of the present invention.

(1) Although the stored image is a still image in this embodiment, it may be a moving image.

(2) Although the HTML file name linked with the image is delivered to the WWW server in this embodiment, the image file name may be directly delivered.

(3) Although the image is not compressed in this embodiment, even in a case of a compressed image, the same effects may be obtained by decompressing/compressing the image by a general CODEC.

(4) Although the Output Profile Table of Fig. 3 is used in this embodiment, if the file name of the output profile is received first, the table is not necessary.

(5) Although a pull-down menu is used in this embodiment, other user interfaces such as check buttons may be used only if they can be selected from items.

(6) Although the output profile includes the chromaticity and gamma coefficient, the profile may include any one or more combined attributes of a color lookup table, illumination information, and color coordinate system converting equation.

(7) Although the stored image is RGB data in this embodiment, it may be device independent color data such as a CIE-XYZ or CIE-LAB data. In this case, conversion from input device colors into device independent colors may be omitted.

Embodiment 2

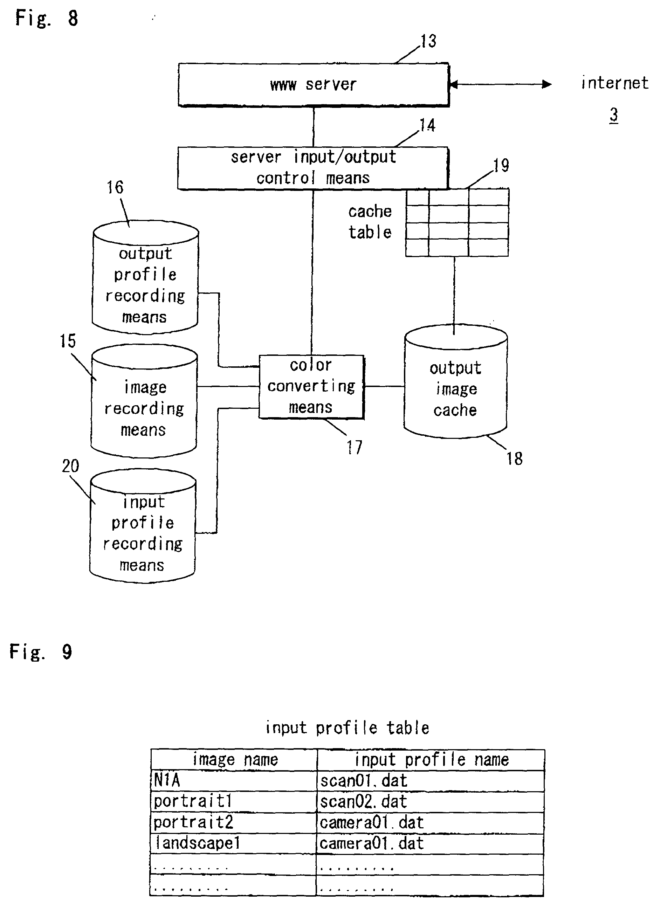

Referring to Figs. 8 and 9, in a second embodiment of the present invention, the points of difference from the first embodiment are that an input profile recording means 20 is provided and server input/output control means 14 acquires data saved in the recording terminal.

First, the input profile is explained. Hereinafter, "input" means that a storing image is generated by an input device and stored in image recording means 15.

Although images inputted by a specific scanner are recorded in image recording means 15 in the first embodiment, m image recording means 15 of this second embodiment, images inputted by a plurality of input devices, such as digital cameras, scanners, and the like, are recorded. The input profile for a selected stored image is managed based on the input profile table shown in Fig. 9.

That is, in this second embodiment, it is considered that input device colors (R1, G1, B1) are replaced by other input device colors (Ra, Ga, Ba) or (Rb, Gb, Bb).

Next, server input/output control means 14 is explained. Generally, in the WWW system, WWW server 13 cannot actively access the recording means of the receiving terminal, however there is only one exception.

If the system called "COOKIE" is used, recording of the data from WWW server 13 into the receiving terminal is possible. Therefore, a command for recording selected color attribute information into a user receiving terminal when the user selects his/her own receiving terminal first is included in the HTML file of Fig. 2.

Furthermore, with the next access to the server, if the color attribute information is recorded in the receiving terminal, a command for automatically selecting the information is included in the HTML file of Fig. 2.

Thus, in the second embodiment of the present invention, in addition to the effects of Embodiment 1, the following effects are obtained for delivery of stored images to a plurality of receiving terminals with WWW browsers.

(1) Due to provision of an input profile, images created by a plurality of input devices with different color properties can be stored as they are.

(2) Automatic acquisition of infomation saved in a receiving terminal makes it unnecessary for the receiving terminal to set the attribute information from the second access after the first access.

Furthermore, the following changes are permissible in the second embodiment of the present invention.

(1) In this embodiment, although the input profile table of Fig. 9 is used, images are classified so that the file names of the input profiles are distinguished. Alternatively, if input profile information is buried in the images, the table is not necessary.

(2) Although the input profile includes the chromaticity and gamma coefficient, it may include one or more combined attributes of the chromaticity, gamma coefficient, color lookup table, illumination information, color coordinate system converting equation, input device name, and input device ID.

(3) On the menu screen of Fig. 5, terminal attribute selection items and image selection items are displayed on one page. However, these selection items may be put on separate pages, and if attribute information saved in the receiving terminal can be acquired, the display of the terminal attribute selection items may be omitted.

Embodiment 3

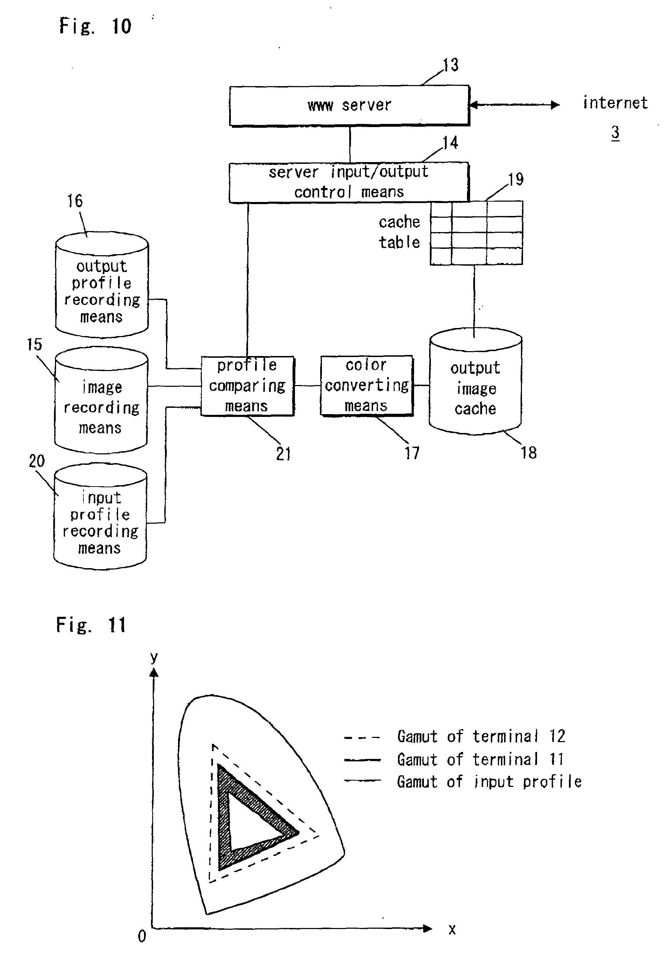

Referring to Fig. 10, the differences between this third embodiment of the present invention, and the second embodiment of the present invention include the provision of a profile comparing means 21 and the operation of color converting means 17.

The x-y chromaticity diagram is shown in Fig. 11. In Fig. 11, the elliptic section at the outermost side shows a color range which is visible to humans, and the Gamut (color reproduction range) of the display part of each receiving terminal is as shown.

For example, since the Gamut of receiving terminal 11 is smaller than that of the input profile, receiving terminal 11 cannot precisely and colorimetrically reproduce all the colors inputted by input devices. Therefore, in this embodiment, the following color correction is made by using profile comparing means 21.

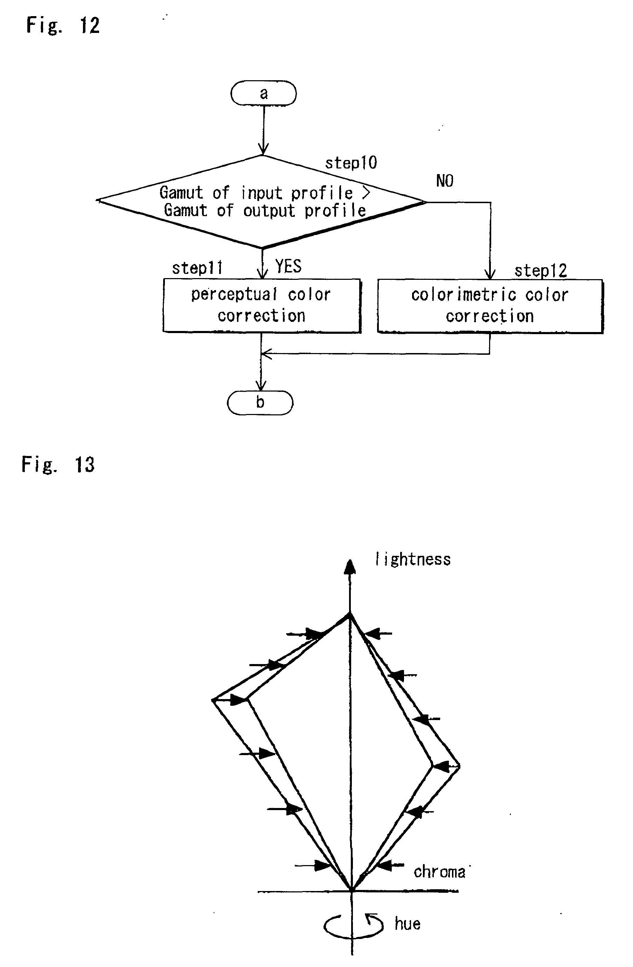

Referring to Fig. 12, first, in step 10, profile comparing means 21 compares the Gamut area of the input profile and the Gamut area of the output profile. If the input profile Gamut is smaller, color converting means 17 carries out color conversion (colorimetric correction) as in the second embodiment. If the input profile Gamut is larger, color converting means 17 carries out perceptual color correction. Herein, "perceptual color correction" is a correction by which humans sense approximation in color balance although there is no colorimetric matching.

For example, regarding an ICC profile, three types of lookup tables are prepared as the Rendering Intent (reproduction purpose).

$$R_2 = R_1^{\cdot 1/\gamma_2}$$
$$G_2 = G_1^{\cdot 1/\gamma_2} \qquad \text{Equation 5}$$
$$B_2 = B_1^{\cdot 1/\gamma_2}$$

In this embodiment, by gradation balance conversion through Equation 1 and Equation 5, perceptual color correction is made. If colors are subjected to direct color conversion, the color becomes unclear. The purpose of such a perceptual color correction is to avoid this.

Thus, in addition to the effects in Embodiments 1 and 2, the following effects are obtained for delivery of stored images to a plurality of receiving terminals with WWW browsers.

(1) The color reproduction ranges are compared, and the converting method is switched between colorimetric color correction and perceptual color correction, whereby collapse of gradation balance due to differences in the color reproduction range is suppressed. This results in the color of the image being close to the original color intended by the server even in a terminal with a narrow color reproduction range.

In this embodiment, profile comparing means 21 compares the extent of the Gamut of the input profile and the extent of the Gamut of the output profile. However, by using one or more factors such as the relative area ratio of the Gamut of the output profile to the Gamut of the input profile, their positional relationship in color space, and the like, the color converting method may be changed.

In this embodiment, although Equation 1 and Equation 5 are used for perceptual color correction, other equations and lookup tables may be used to make the correction for changing the color saturation and brightness while maintaining the hue.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

A stored image is delivered via a network in response to requests from receiving terminals. Information concerning the color properties of the receiving terminals is acquired, and, based on the acquired information, the stored image is color-converted into images in accordance with the color properties of each receiving terminal. The color-converted stored images are the delivered. An output profile for each receiving terminal is used to improve color reproductivity.

**Claims**

1. A stored image delivery method for delivering a stored image via a network in response to a request from a receiving terminal, comprising:

   acquiring information concerning color properties of said receiving terminal;
   color-converting said stored image into an image in accordance with said color properties of said receiving terminal based on said acquired information; and
   delivering said color-converted stored image to said receiving terminal.

2. A stored image delivery method, comprising:

   receiving stored image selection information and receiving terminal attribute information from a WWW server;
   using an output profile corresponding to said attribute information of said receiving terminal to convert a stored image into a converted image in accordance with color properties of said receiving terminal;
   storing said converted image in a cache; and
   notifying said WWW server of one of either positional information of said converted image stored in said cache or positional information of an HTML file linked with said converted image.

3. The stored image delivery method according to Claim 2, wherein said output profile includes at least one combined attribute selected from the group consisting of colorimetric value, gamma coefficient, single-dimensional lookup table, three-dimensional lookup table, illumination information, color coordinate system converting equation, and output device ID.

4. The stored image delivery method according to Claim 2, wherein an image that has already been color-converted and stored in said cache is diverted and color conversion is omitted.

5. The stored image delivery method according to Claim 3, wherein an image that has already been color-converted and stored in said cache is diverted and color conversion is omitted.

6. The stored image delivery method according to Claim 2, wherein said receiving terminal uses attribute information that has been saved in said receiving terminal during previous access to said WWW server.

7. The stored image delivery method according to Claim 2, wherein attribute information of said receiving terminal describes an actual type of said receiving terminal itself, said actual type being selected from a list in an HTML file that said receiving terminal has downloaded from said WWW server.

8. The stored image delivery method according to Claim 2, further comprising:

   comparing a device color reproduction range of said input device that has created said stored image with a terminal color reproduction range of said receiving terminal; and
   switching said color converting method.

9. A stored image delivery method, comprising:

   receiving stored image selection information and receiving terminal attribute information from a WWW server;
   converting said stored image into a converted image in accordance with color properties of a receiving terminal by using an input profile relating to an input device which has created said stored image and an output profile corresponding to said receiving terminal attribute information;
   storing said converted image in a cache; and
   notifying said WWW server of one of either positional information of said converted image stored in said cache or positional information of an HTML file linked with said converted image.

10. The stored image delivery method according to Claim 9, wherein said output profile includes at least one combined attribute selected from the group consisting of colorimetric value, gamma coefficient, single-dimensional lookup table, three-dimensional lookup table, illumination information, color coordinate system converting equation, and output device ID.

**11.** The stored image delivery method according to Claim 9, wherein an image that has already been color-converted and stored in said cache is diverted and color conversion is omitted.

**12.** The stored image delivery method according to Claim 10, wherein an image that has already been color-converted and stored in said cache is diverted and color conversion is omitted.

**13.** The stored image delivery method according to Claim 9, wherein said receiving terminal uses attribute information that has been saved in said receiving terminal during previous access to said WWW server.

**14.** The stored image delivery method according to Claim 9, wherein attribute information of said receiving terminal describes an actual type of said receiving terminal itself, said actual type being selected from a list in an HTML file that said receiving terminal has downloaded from said WWW server.

**15.** The stored image delivery method according to Claim 9, further comprising:

comparing a device color reproduction range of said input device that has created said stored image with a terminal color reproduction range of said receiving terminal; and
switching said color converting method.

**16.** A recording medium in which, in a readable manner, programs are recorded according to steps comprising:

delivering a stored image via a network in response to a request from a receiving terminal;
acquiring information concerning color properties of said receiving terminal;
color-converting said stored image into a converted image in accordance with said color properties of said receiving terminal based on said acquired information; and
delivering said converted image to said receiving terminal.

**17.** A stored image delivery device comprising:

a WWW server;
an image recording means for recording an image to be stored;
an output profile recording means for recording an output profile corresponding to attribute information of a receiving terminal;
a color converting means for converting said image into a converted image in accordance with color properties of said receiving terminal and outputting said converted image;
an output image cache for storing said converted image outputted from said color converting means; and
a server input/output control means, which receives stored image selection information and receiving terminal attribute information from said WWW server, outputs said stored image selection information and said receiving terminal attribute information to said color converting means, and notifies said WWW server of one of either positional information of the output image in said output image cache outputted from said color converting means or positional information of an HTML file linked with said converted image.

**18.** The stored image delivery device according to Claim 17, wherein said output profile includes at least one combined attribute selected from the group consisting of colorimetric value, gamma coefficient, single-dimensional lookup table, three-dimensional lookup table, illumination information, color coordinate system converting equation, and output device ID.

**19.** The stored image delivery method according to Claim 17, wherein an image that has already been color-converted and stored in said cache is diverted and color conversion is omitted.

**20.** The stored image delivery method according to Claim 18, wherein an image that has already been color-converted and stored in said cache is diverted and color conversion is omitted.

**21.** The stored image delivery method according to Claim 17, wherein said receiving terminal uses attribute information that has been saved in said receiving terminal during previous access to said WWW server.

**22.** The stored image delivery method according to Claim 17, wherein attribute information of said receiving terminal describes an actual type of said receiving terminal itself, said actual type being selected from a list in an HTML file that said receiving terminal has downloaded from said WWW server.

23. The stored image delivery method according to Claim 17, further comprising:

comparing a device color reproduction range of said input device that has created said stored image with a terminal color reproduction range of said receiving terminal; and
switching said color converting method.

24. A stored image delivery device comprising:

a WWW server;
an image recording means for recording an image to be stored;
an input profile recording means for recording an input profile corresponding to said image of said image recording means;
an output profile recording means for recording an output profile corresponding to attribute information of said receiving terminal;
a color converting means for converting said image into a converted image in accordance with color properties of said receiving terminal by using said input profile and said output profile;
an output image cache for storing said converted image outputted from said color converting means; and
a server input/output control means, which receives image selection information and receiving terminal attribute information from said WWW server, outputs said image selection information and said receiving terminal attribute information to said color converting means, and notifies said WWW server of one of either positional information of said converted image in said output image cache outputted from said color converting means or positional information of an HTML file linked with said converted image.

25. The stored image delivery method according to Claim 24, wherein said output profile includes at least one combined attribute selected from the group consisting of colorimetric value, gamma coefficient, single-dimensional lookup table, three-dimensional lookup table, illumination information, color coordinate system converting equation, and output device ID.

26. The stored image delivery method according to Claim 24, wherein an image that has already been color-converted and stored in said cache is diverted and color conversion is omitted.

27. The stored image delivery method according to Claim 25, wherein an image that has already been color-converted and stored in said cache is diverted and color conversion is omitted.

28. The stored image delivery method according to Claim 24, wherein said receiving terminal uses attribute information that has been saved in said receiving terminal during previous access to said WWW server.

29. The stored image delivery method according to Claim 24, wherein attribute information of said receiving terminal describes an actual type of said receiving terminal itself, said actual type being selected from a list in an HTML file that said receiving terminal has downloaded from said WWW server.

30. The stored image delivery method according to Claim 24, further comprising:

comparing a device color reproduction range of said input device that has created said stored image with a terminal color reproduction range of said receiving terminal; and
switching said color converting method.

Fig. 1

EP 1 207 463 A2

## Fig. 2

12

Fig. 3

output profile table

| attribute | output profile name |
|---|---|
| A: cell phone 502 | a00502.dat |
| B: TV32 | b0t32.dat |
| C: CRT1 | ccrt001.dat |
| D: LCD2 | d0Lcd02.dat |
| E: Book PC1 | ePc01.dat |
| . . . . . . . . . | . . . . . . . . . |

Fig. 4

cache table

| No. | image name | attribute | output image filename | output HTML filename |
|---|---|---|---|---|
| 1 | N1A | A: cell phone 502 | a0001.jpg | b0001.html |
| 2 | portrait1 | E: Book PC1 | a0002.jpg | b0002.html |
| 3 | landscape1 | B: TV32 | a0003.jpg | b0003.html |
| 4 | N1A | D: LCD2 | a0004.jpg | b0004.html |
| 5 | portrait2 | A: cell phone 502 | a0005.jpg | b0005.html |

Fig. 5

```
★ www Browser                                          _ □ ✕
File(F)  Edit(E)  View(V)  Jump(G)  Communicator(C)  Help(H)
                                                              ▲
  Please choose items and click "transmit" button  [transmit]


  Your monitor: CIE-ITU              ▼
                Standard RGB Monitor
                Panasonic PanaSync
                Panasonic LCD
                Rec601


  Please select an image you want to see
              ⦿  portrait(N1A)

              ○  cafeteria(N2A)

              ○  fruit basket(N3A)
                                                              ▼
```

Fig. 6

R₁ G₁ B₁ → ○ → X Y Z → ○ → R₂ G₂ B₂

input device color          display device color

device independent color

Fig. 7

```
          start
            │
            ▼              step1
   ┌──────────────────┐
   │  stored image and │
   │ attribute information │
   │     acquired      │
   └──────────────────┘
            │
            ▼              step2
        ◇ in cache table? ◇ ──── NO ───┐
            │                           │
           YES                          ▼       step3
            │                     ┌──────────────┐
            │                     │ convert color │
            │                     └──────────────┘
            │                           │
            │                           ▼       step4
            │                     ┌──────────────┐
            │◄────────────────────│ update cache │
            │                     │    table     │
            │                     └──────────────┘
            ▼              step5
   ┌──────────────┐
   │    notify     │
   │  www server   │
   └──────────────┘
            │
            ▼
           end
```

Fig. 8

```
                                                    ┌13
┌──────────────────────────────────┐
│           www server             │◄──────► internet
└──────────────────────────────────┘              3
                                                ┌14
┌──────────────────────────────────┐
│        server input/output       │        ┌19
│           control means          │     ┌──────┐
└──────────────────────────────────┘     │cache │
                                         │table │
   ┌16                                   └──────┘
 ┌──────────┐
 │ output   │
 │ profile  │
 │recording │          ┌──────────┐        ┌──────────┐
 │ means    │          │ color    │        │ output   │
 └──────────┘          │converting│        │ image    │
   15                  │ means    │        │ cache    │
 ┌──────────┐          └──────────┘        └──────────┘
 │ image    │              17                  18
 │recording │
 │ means    │
 └──────────┘
   20
 ┌──────────┐
 │ input    │
 │ profile  │
 │recording │
 │ means    │
 └──────────┘
```

Fig. 9

input profile table

| image name | input profile name |
|------------|--------------------|
| N1A | scan01.dat |
| portrait1 | scan02.dat |
| portrait2 | camera01.dat |
| landscape1 | camera01.dat |
| ......... | ........ |
| ......... | ........ |

Fig. 10

www server — 13

internet 3

server input/output control means — 14

cache table — 19

output profile recording means — 16

image recording means — 15

input profile recording means — 20

profile comparing means — 21

color converting means — 17

output image cache — 18

Fig. 11

--- Gamut of terminal 12
— Gamut of terminal 11
— Gamut of input profile

Fig. 12

Fig. 13

Fig. 14